# EUROPEAN PATENT SPECIFICATION

(11) **EP 4 123 995 B1**
(45) Date of publication and mention of the grant of the patent: **23.04.2025**
(21) Application number: 22153747.5
(22) Date of filing: 27.01.2022
(51) Int. Cl.: H04L 65/80, H04L 65/1016, H04L 65/1059, H04L 65/1083, H04L 65/1095, H04W 36/00, H04W 88/06

(54) **VOICE CALL METHOD, TERMINAL AND STORAGE MEDIUM**
SPRACHANRUFVERFAHREN, ENDGERÄT UND SPEICHERMEDIUM
PROCÉDÉ D'APPEL VOCAL, TERMINAL ET SUPPORT DE STOCKAGE

(30) Priority: 19.07.2021 CN 202110812461
(43) Date of publication of application: 25.01.2023
(73) Proprietor: Beijing Xiaomi Mobile Software Co., Ltd., Beijing 100085 (CN)
(72) Inventor: QI, Jianfeng, Beijing, 100085 (CN)
(74) Representative: dompatent von Kreisler Selting Werner - Partnerschaft von Patent- und Rechtsanwälten mbB

(56) References cited:
- US-A1- 2015 092 611
- US-A1- 2017 118 255
- US-A1- 2019 306 898

## Description

### TECHNICAL FIELD

The disclosure relates to the field of communication technology, in particular to a voice call method and apparatus, a terminal, and a storage medium.

### BACKGROUND

With the development of network communication technology, most of the current terminals support voice session functions. For example, Voice over Long Term Evolution (VoLTE) is a voice solution based on an Internet protocol Multimedia Subsystem (IMS), which provides a high-definition voice service based on an Internet Protocol (IP) in a network coverage area. Shorter connection waiting time and higherquality and more natural voice call effect are the most direct experience that the VoLTE technology brings to users.
Multi-card terminals that support multiple Subscriber Identity Module (SIM) cards are becoming more and more popular. For example, dual-SIM cell phones have become the mainstream configuration, and dual-SIM cell phones have become a trend at home and abroad. For such multi-card terminals, how to improve the user experience of a voice session has also become an issue of concern.
In the related art, US 2019/306898 A1 provides a systems, apparatuses, and methods for Internet resource sharing between multiple subscribers, for example, a first subscriber and a second subscriber, each of which may be in active communications with a cellular network or in a standby mode. It may be determined whether to use an internet connectivity provided by the first subscriber for an IP Multimedia Subsystem (IMS) service on the second subscriber. The second subscriber may conduct the IMS service via internal hotspot provided by the first subscriber or via the second subscriber's own cellular network, or switch between the two. A packet data network connection may be established to transport IMS data and signaling between the second subscriber and a gateway of the second network through the first network.
US 2015/092611 A1 provides a methods and devices are disclosed for establishing a second call during a first call on a multi-SIM communication device. A quality of the first call between a calling party and a called party using a first subscription for a first network may be determined to be degrading. Network alternatives may be provided for establishing the second call in response to determining that the quality of the first call is degrading. One of the network alternatives may be selected based on an order of suitability for originating the second call. A notification to the called party using information associated with calling party and the second call may be provided before the second call is originated. The information associated with the second call may identify the calling party to the called party before the second call is originated.
US 2017/118255 A1 provides a mobile communication device including a wireless transceiver and a wireless transceiver is provided. The wireless transceiver performs wireless transmission and reception to and from a first service network and a second service network. The controller uses a first subscriber identity card to establish one or more first radio bearers with the first service network via the wireless transceiver, uses a second subscriber identity card to set up an Internet Protocol Security (IPsec) tunnel with an evolved Packet Data Gateway (ePDG) of the second service network via the first radio bearers, and uses the second subscriber identity card to register an IP Multimedia Subsystem (IMS) service with the second service network via the IPsec tunnel.

### SUMMARY

The disclosure provides a voice call method and apparatus, a terminal, and a storage medium.

According to a first aspect of the disclosure, a voice call method is provided according to independent claim 1. The method is applied to a terminal including a first subscriber module and a second subscriber module, and includes:
monitoring a network quality of the first subscriber module while performing an Internet protocol Multimedia Subsystem (IMS) session; and
in response to determining that the network quality of the first subscriber module while performing the IMS session does not satisfy a preset network quality condition, and the second subscriber module satisfies a predetermined switching condition, switching to the second subscriber module to continue the IMS session.

Optionally, switching to the second subscriber module to continue the IMS session includes:
performing Internet Protocol Security (IPSec) authentication on a network of the second subscriber module by using identity parameters of the first subscriber module; and
after the IPSec authentication succeeds, continuing the IMS session through the second subscriber module.

Optionally, performing IPSec authentication on the network of the second subscriber module by using identity parameters of the first subscriber module includes:
performing the IPSec authentication on the network of the second subscriber module by using the identity parameters of the first subscriber module during the second subscriber module establishes an IMS Public Data Network (PDN) connection.

The second subscriber module satisfying the predetermined switching condition includes:
the network quality of the second subscriber module being better than that of the first subscriber module;
   and/or,
the network traffic accounting mode of the second subscriber module being better than that of the first subscriber module.

Optionally, evaluation parameters for the network quality include at least one of:
Signal to Noise Ratio (SNR) of a network transmission channel;
Block Error Rate (BLER) of the network transmission channel; and
Reference Signal Receiving Power (RSRP) of the network transmission channel.

Monitoring the network quality of the first subscriber module while performing an IMS session includes:
comprehensively determining the network quality of the first subscriber module while performing the IMS session based on the evaluation parameters for the network quality, each of the evaluation parameters for the network quality corresponding to a preset weight.

Optionally, monitoring the network quality of the first subscriber module while performing an IMS session includes:
determining the network quality of the first subscriber module while performing the IMS session based on evaluation parameters for a voice state, the evaluation parameters for the voice state including at least one of:
bit error rate of voice;
silent frames of voice; and
frame rate of voice.

According to a second aspect of the disclosure, a terminal is provided, including:
a first subscriber module and a second subscriber module;
a processor; and
a memory for storing processor executable instructions;
the processor is configured to execute the voice call method as described in the first aspect above.

According to a third aspect of the disclosure, a non-transitory computer-readable storage medium is provided, when instructions in the storage medium are executed by a processor of a terminal, the terminal can execute the voice call method as described in the first aspect above.

In an exemplary embodiment of the invention, a computer program product can be provided, including a computer program executable, by a programmable device, where the computer program has code portions implementing the voice call method as described in the first aspect above.

The technical solutions provided by the examples of the disclosure may include the following beneficial effects:
In the examples of the disclosure, the terminal monitors the network quality of the first subscriber module while performing the IMS session, and is switched to the second subscriber module to continue the IMS session when determining that the network quality of the first subscriber module while performing the IMS session does not satisfy the preset network quality condition, and the second subscriber module satisfies the predetermined switching condition. It is understandable that the bearer mode of the IMS session in the disclosure supports the transfer of the IMS session between different subscriber modules, which can improve the user experience.

It should be understood that the above general description and the following detailed description are only examples and explanatory, and cannot limit the disclosure.

### BRIEF DESCRIPTION OF DRAWINGS

The accompanying drawings herein are incorporated into the specification and constitute a part of the specification, show examples consistent with the disclosure, and are used to explain the principle of the disclosure together with the specification.
FIG. 1 is a flowchart of a voice call method shown in an example of the disclosure.
FIG. 2 is an example diagram of a voice call method based on dual SIM cards.
FIG. 3 is a flowchart of a voice call method shown in an example of the disclosure.
FIG. 4 is a schematic architecture diagram of a voice call method in an example of the disclosure.
FIG. 5 is a diagram of a voice call apparatus shown in an example of the disclosure.
FIG. 6 is a block diagram of a terminal shown in an example of the disclosure.

### DETAILED DESCRIPTION OF THE EXAMPLES

Examples will be described in detail here, and are shown in the accompanying drawings. When the following descriptions refer to the drawings, the same numbers in different drawings indicate the same or similar elements, unless otherwise indicated. The implementation manners described in the following examples do not represent all implementation manners consistent with the disclosure. Instead, they are examples of apparatuses and methods consistent with some aspects of the disclosure described as detailed in the appended claims.

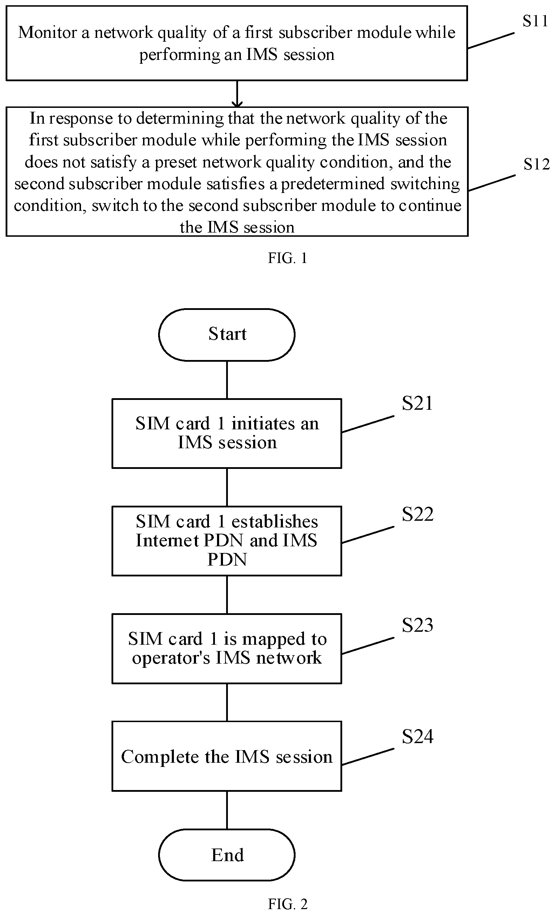

FIG. 1 is a flowchart of a voice call method shown in an example of the disclosure. As shown in FIG. 1, the voice call method is applied to a terminal including a first subscriber module and a second subscriber module, and includes the following steps:
In step S11, a network quality of the first subscriber module while performing an Internet protocol Multimedia Subsystem (IMS) session is monitored;
In step S12, in response to determining that the network quality of the first subscriber module while performing the IMS session does not satisfy a preset network quality condition, and the second subscriber module satisfies a predetermined switching condition, switching to the second subscriber module is performed to continue the IMS session.

In the example of the disclosure, the terminal device includes: a cell phone, a tablet or a wearable device.

The terminal device includes a first subscriber module and a second subscriber module, the first subscriber module and the second subscriber module are configured to uniquely identify user's identity, and a mobile terminal of user can communicate with other communication devices based on the first subscriber module and/or the second subscriber module. The first subscriber module or the second subscriber module may be a physical SIM card, for example, the mobile terminal includes a first SIM card and a second SIM card. In addition, the first subscriber module and the second subscriber module may also be virtual user identification cards, etc., which is not limited in the example of the disclosure.

Moreover, in the example of the disclosure, the IP Multimedia Subsystem (IMS) session includes VoLTE sessions, Video over LTE (ViLTE) sessions, or Voice over NewRadio (VoNR) sessions, etc.

FIG. 2 is an example diagram of a voice call method based on dual SIM cards. As shown in FIG. 2, an IMS session based on SIM card 1 is taken as an example. In step S21, the terminal device initiates an IMS session through SIM card 1. After the IMS session is initiated, in step S22, the SIM card 1 establishes an Internet Public Data Network (PDN) connection and an IMS PDN connection. Then in step S23, the SIM card 1 is mapped to an operator's IMS network, that is, IMS registration of the SIM card 1 is completed. After the registration is completed, in step S24, the terminal device can complete the IMS session through the SIM card 1 until the session ends.

However, in the above voice call mode, the voice session may be intermittent, voiceless, or single-call (only voice output or voice input) due to no network service in the SIM card 1, or weak network signal, resulting in poor user experience.

In this regard, the terminal in the example of the disclosure monitors the network quality of the first subscriber module while performing the IMS session, and is switched to the second subscriber module to continue the IMS session through the second subscriber module when determining that the network quality of the first subscriber module while performing the IMS session does not satisfy the preset network quality condition, and the second subscriber module satisfies the predetermined switching condition. It is understandable that the bearer mode of the IMS session in the disclosure supports the transfer of the IMS session between different subscriber modules, which can improve the user experience.

It should be noted that in the example of the disclosure, the first subscriber module may be the SIM card 1 or the SIM card 2, and the second subscriber module is a subscriber module different from the first subscriber module in the terminal device. Moreover, in the example of the disclosure, as long as the second subscriber module does not perform the IMS session and the switching condition is satisfied, the terminal can be switched to the second subscriber module to continue the IMS session through the second subscriber module.

For example, the terminal device performs a web browsing operation through the SIM card 2. If the network quality is poor when the terminal device performs a VoLTE session through the SIM card 1, the terminal device can be switched to the SIM card 2 to continue the IMS session in the case where the SIM card 2 satisfies the predetermined switching condition.

The second subscriber module satisfying a predetermined switching condition includes: the network quality of the second subscriber module being better than that of the first subscriber module; and/or, the network traffic accounting mode of the second subscriber module being better than that of the first subscriber module.

In this example, because the network quality of the first subscriber module does not satisfy the preset network quality condition, when the network quality of the second subscriber module is better than that of the first subscriber module, switching to the second subscriber module to continue the IMS session can improve the user experience.

In addition, when the network quality of the first subscriber module does not satisfy the preset network quality condition, and the network quality of the second subscriber module is not better than that of the first subscriber module, if the network traffic accounting mode of the second subscriber module is better than that of the first subscriber module, switching to the second subscriber module to continue the IMS session can also improve the user experience. For example, if the network traffic accounting mode of the second subscriber module is packet traffic, and the network traffic accounting mode of the first subscriber module is real-time traffic accounting, the second subscriber module is preferred to continue the IMS session, which can reduce the cost and improve the user experience.

It is understandable that if the network quality of the second subscriber module is better than that of the first subscriber module, and the network traffic accounting mode of the second subscriber module is better than that of the first subscriber module, the user's voice session listening experience is improved, and meanwhile, the cost can be reduced and better experience can be brought to the user.

In an example, evaluation parameters for the network quality include at least one of:
Signal to Noise Ratio (SNR) of the network transmission channel;
Block Error Rate (BLER) of the network transmission channel;
Reference Signal Receiving Power (RSRP) of the network transmission channel.

Taking SNR as an example, if the SNR of the transmission channel of a first network is less than a preset SNR threshold, it indicates that the network quality of the first network does not satisfy the preset network quality condition.

Taking BLER as an example, if the percentage of error data blocks in all sent data blocks is greater than a preset block error rate threshold when data is transmitted based on the first network, it indicates that the network quality of the first network does not satisfy the preset network quality condition.

Taking RSRP as an example, if the receiving power on a resource element of a bearer reference signal on the first network is less than a preset power threshold, it indicates that the network quality of the first network does not satisfy the preset network quality condition.

In the disclosure, when the network quality of the first subscriber module is monitored, a comparison can be made based on one or more of the above parameters to determine a subscriber module with a better network. It should be noted that when the network quality of the second subscriber module is monitored in the disclosure, the monitoring can be performed in the same way as the first subscriber module.

In an example, monitoring the network quality of the first subscriber module while performing the IMS session includes:
the network quality of the first subscriber module while performing the IMS session is comprehensively determined based on a plurality of evaluation parameters for the network quality, each of the evaluation parameters for the network quality corresponding to a preset weight.

In this example, the network quality of the first subscriber module while performing the IMS session is comprehensively determined through the network quality evaluation parameters with different preset weights, which can improve the accuracy of network quality evaluation.

In an example, monitoring the network quality of the first subscriber module while performing the IMS session includes:
the network quality of the first subscriber module while performing the IMS session is determined based on evaluation parameters for a voice state, the evaluation parameters for the voice state including at least one of:
bit error rate of voice;
silent frames of voice; and
frame rate of voice.

In the example of the disclosure, when the first user performs the IMS session, the network quality can be determined based on the voice state.

Taking the bit error rate of voice as an example, the bit error rate of voice can be an indicator for measuring the accuracy of data transmission within a specified time, and if the bit error rate is lower, it indicates that the voice state is better and the corresponding network quality may also be better.

Taking the silent frames of voice as an example, if the number of silent frames in a certain time is larger, it indicates that the voice of both parties in the session has not been sent or received correctly, and the corresponding network quality may be poor.

Taking the frame rate of voice as an example, if the frame rate is relatively low, the other party may fail to decode voice data after sent to the other party, and the relatively low frame rate may also be caused by poor network quality.

It is understandable that, in this example, it is more intuitive and accurate to evaluate the network quality according to the final voice sent or received by both parties in the session.

In an example, switching to the second subscriber module to continue the IMS session includes:
Internet Protocol Security (IPSec) authentication is performed on a network of the second subscriber module by using identity parameters of the first subscriber module; and
after the IPSec authentication succeeds, the IMS session is continued through the second subscriber module.

The purpose of IPSec authentication is to authenticate the legal identity of the subscriber module, and the network transmission protocol family of an IP protocol is protected by encrypting and authenticating packets of the IP protocol.

In the example of the disclosure, when switching to the second subscriber module to continue the IMS session through the second subscriber module, because the first subscriber module of the terminal device previously performs the IMS session after completing the IPSec authentication with an opposite end device, and because the first subscriber module and the second subscriber module may come from different operators, the network side may not be able to approve the authentication of the second subscriber module, and the switching to the second subscriber module may not be completed. For example, the service provider of the first subscriber module is Mobile, and the service provider of the second subscriber module is Telecom. Because the first subscriber module performs the IMS session first, and the IMS network supporting the IMS session of the first subscriber module is a Mobile network, the IMS session has to be continued under the IMS network of the Mobile operator.

In the disclosure, the IPSec authentication is performed on the network of the second subscriber module by using the identity parameters of the first subscriber module during the process of switching to the second subscriber module. The identity parameters of the first subscriber module include: International Mobile Subscriber Identity (IMSI), encrypted information stored in the first subscriber module, etc.

For example, when the IPSec authentication is performed on the network of the second subscriber module by using the identity parameters of the first subscriber module, the authentication may be completed on the network of the second subscriber module based on a key stored in the first subscriber module.

It is understandable that, in the disclosure, the authentication is performed on the network of the second subscriber module by using the identity parameters of the first subscriber module, so that the first subscriber module and the second subscriber module coming from different operators can also support the session switching, which improves the success rate of the IMS session switching.

In an example, performing IPSec authentication on the network of the second subscriber module by using identity parameters of the first subscriber module includes:
the IPSec authentication is performed on the network of the second subscriber module by using the identity parameters of the first subscriber module during the second subscriber module establishes an IMS Public Data Network (PDN) connection.

In the example of the disclosure, when switching to the second subscriber module for the IMS session, the second subscriber module also needs to perform IMS registration. In the disclosure, when the second subscriber module performs the IMS registration, the IPSec authentication is performed on the network of the second subscriber module by using the identity parameters of the first subscriber module to realize the IMS PDN connection and complete the registration.

It should be noted that, in the disclosure, after switched to the second subscriber module to continue the IMS session, the terminal device can still be switched to the first subscriber module to continue the IMS session when the network quality of the second subscriber module while performing the IMS session does not satisfy the preset network quality condition, and the first subscriber module satisfies the predetermined switching condition. During the process of switching to the first subscriber module to continue the IMS session, IPSec authentication can be performed on the network of the first subscriber module by using identity parameters of the second subscriber module, which will not be described in detail here.

In addition, the principle of the above solution of the disclosure can also be applied to a multi-card terminal with more than two subscriber modules, which will also not be described in detail in the example of the disclosure.

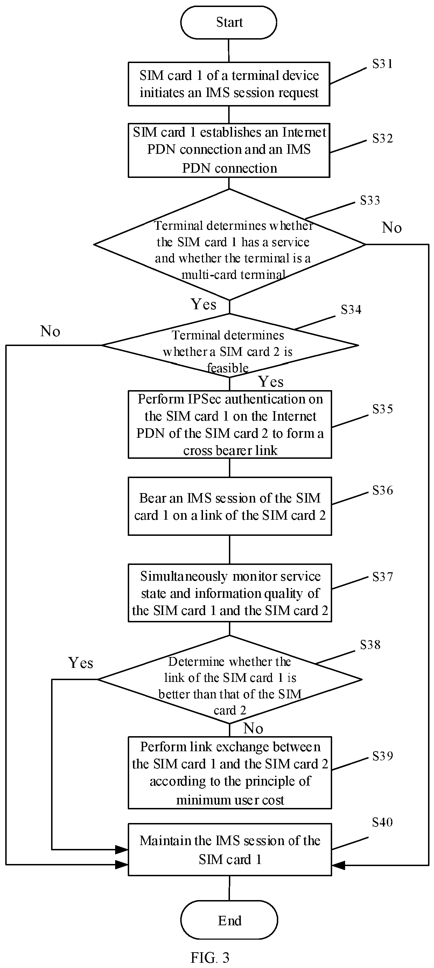

FIG. 3 is a flowchart of a voice call method shown in an example of the disclosure. As shown in FIG. 3, the method is applied to a terminal including SIM card 1 and SIM card 2, and includes the following steps.

In step S31, the SIM card 1 of the terminal device initiates an IMS session request.

In the example of the disclosure, the SIM card 1 may be a first subscriber module, and the SIM card 2 may be a second subscriber module.

Next in step S32, the SIM card 1 establishes an Internet PDN connection and an IMS PDN connection.

In this example, after the Internet PDN connection and the IMS PDN connection are established, the IMS registration of the SIM card 1 is completed.

Then in step S33, the terminal determines whether the SIM card 1 has a service and whether the terminal is a multi-card terminal. If the SIM card 1 does not have service or if the terminal is not a multi-card terminal, step S40 is performed.

In this example, whether the SIM card 1 has a service includes whether the network has a signal, or whether the signal is weak. This determination can be based on signal to noise ratio, block error rate, reference signal transmission power, or evaluation parameters related to a voice state.

Next in step S34, the terminal determines whether the SIM card 2 is feasible, and if feasible, step S35 is performed; or if not feasible, step S40 is performed.

In this example, whether the SIM card 2 is feasible includes whether the second subscriber module satisfies a predetermined switching condition, which will not be described in detail here.

In step S35, IPSec authentication is performed on the SIM card 1 on the Internet PDN of the SIM card 2 to form a cross bearer link.

In this example, the IPSec authentication is performed on the SIM card 1 on the Internet PDN of the SIM card 2. That is, the IPSec authentication is performed on the network of the second subscriber module by using identity parameters of the first subscriber module.

Next in step S36, an IMS session of the SIM card 1 is borne on a link of the SIM card 2.

In this example, after the authentication succeeds, the IMS session can be continued through the SIM card 2.

Then in step S37, a service state and an information quality of the SIM card 1 and the SIM card 2 are synchronously monitored.

In this example, synchronously monitoring the service state and the information quality of the SIM card 1 and the SIM card 2 includes synchronously monitoring the network quality and voice state of the SIM card 1 and the SIM card 2 to determine whether switching is required.

In step S38, whether the link of the SIM card 1 is better than that of the SIM card 2 is determined, and if so, step S40 is performed; otherwise, step S39 is performed.

In this example, after switching to the SIM card 2, if it is determined based on the monitoring in step S37 that the network quality of the SIM card 1 is better than that of the SIM card 2, the terminal is switched back to the SIM card 1 to continue the IMS session.

In step S39, link exchange is performed between the SIM card 1 and the SIM card 2 according to the principle of minimum user cost.

In this example, the switching according to the network quality can also consider the accounting mode of network traffic. For example, if the network traffic accounting mode of the SIM card 1 is better than that of the SIM card 2, the terminal can also be switched back to the SIM card 1 to continue the IMS session according to the principle of minimum fee.

Finally, in step S40, the IMS session of the SIM card 1 is maintained.

It is understandable that, in the example of the disclosure, the terminal monitors the network quality of the SIM card 1 while performing the IMS session, and is switched to the SIM card 2 to continue the IMS session when determining that the network quality of the SIM card 1 while performing the IMS session does not satisfy the preset network quality condition and the SIM card 2 satisfies the predetermined switching condition. Then, the terminal simultaneously monitors the SIM card 1 and the SIM card 2, and comprehensively determines whether the switching is required during the entire session according to the monitored result and principle of minimum fee. In this way, a dual-card bearer and cross-operator full bearer mode is realized, which can improve user experience.

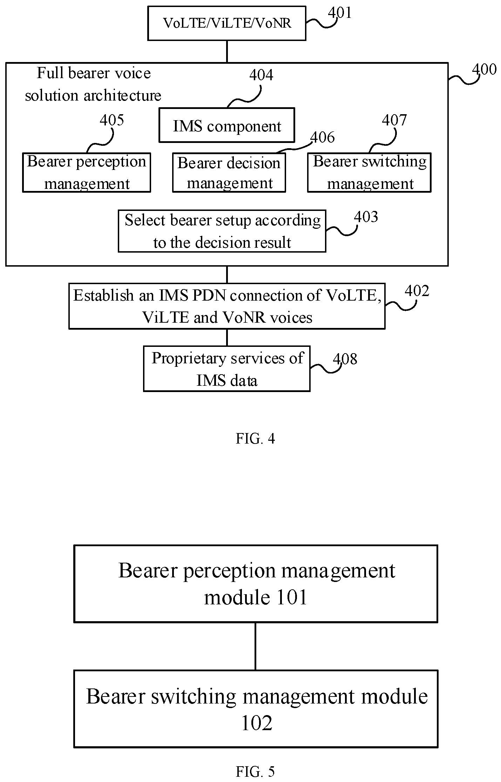

FIG. 4 is a schematic architecture diagram of a voice call method in an example of the disclosure. As shown in FIG. 4, for voice services 401, such as VoLTE, ViLTE and VoNR, the disclosure provides a full bearer voice solution architecture 400, which can establish 402 an IMS PDN connection of VoLTE, ViLTE and VoNR voices after selecting 403 bearer setup according to the decision result based on an IMS component 404 (such as IMSProxyManager in the Android system) through a bearer perception management module 405, a bearer decision management module 406 and a bearer switching management module 407, to implement transceiving of proprietary services of IMS data 408.

FIG. 5 is a diagram of a voice call apparatus shown in an example of the disclosure. Referring to FIG. 5, the apparatus is applied to a terminal including a first subscriber module and a second subscriber module, and the apparatus includes:
a bearer perception management module 101, configured to monitor a network quality of the first subscriber module while performing an Internet protocol Multimedia Subsystem (IMS) session; and
a bearer switching management module 102, configured to switch to the second subscriber module to continue the IMS session in response to determining that the network quality of the first subscriber module while performing the IMS session does not satisfy a preset network quality condition, and the second subscriber module satisfies a predetermined switching condition.

In the example of the disclosure, the terminal device determines whether the network quality of the first subscriber module while performing the IMS session satisfies the preset network quality condition and whether the second subscriber module satisfies the predetermined switching condition through the bearer decision management module, and decides to use the second subscriber module to continue the IMS session when the network quality of the first subscriber module while performing the IMS session does not satisfy the preset network quality condition and the second subscriber module satisfies the predetermined switching condition.

In some examples, the bearer switching management module 102 is further configured to perform Internet Protocol Security (IPSec) authentication on a network of the second subscriber module by using identity parameters of the first subscriber module. After the IPSec authentication succeeds, the second subscriber module continues the IMS session.

In this example, during the switching process, the IPSec authentication is performed on the network of the second subscriber module by using the identity parameters of the first subscriber module, so that the full bearer voice solution of the disclosure supports cross-operator bearers.

In some examples, the bearer switching management module 102 is further configured to perform the IPSec authentication on the network of the second subscriber module by using the identity parameters of the first subscriber module during the second subscriber module establishes an IMS Public Data Network (PDN) connection.

In some examples, the second subscriber module satisfying a predetermined switching condition includes:
the network quality of the second subscriber module being better than that of the first subscriber module;
   and/or,
the network traffic accounting mode of the second subscriber module being better than that of the first subscriber module.

In some examples, evaluation parameters for the network quality include at least one of a Signal to Noise Ratio (SNR) of a network transmission channel, Block Error Rate (BLER) of the network transmission channel, and Reference Signal Receiving Power (RSRP) of the network transmission channel.

In some examples, the bearer perception management module 101 is further configured to comprehensively determine the network quality of the first subscriber module while performing the IMS session based on a plurality of evaluation parameters for the network quality, each of the evaluation parameters for the network quality corresponding to a preset weight.

In some examples, the bearer perception management module 101 is further configured to determine the network quality of the first subscriber module while performing the IMS session based on evaluation parameters for a voice state. The evaluation parameters for the voice state including at least one of a bit error rate of voice, silent frames of voice, and frame rate of voice.

With regard to the apparatuses in the above examples, the specific manners that various modules perform operations have been described in detail in the examples relating to the methods, and details are not described herein.

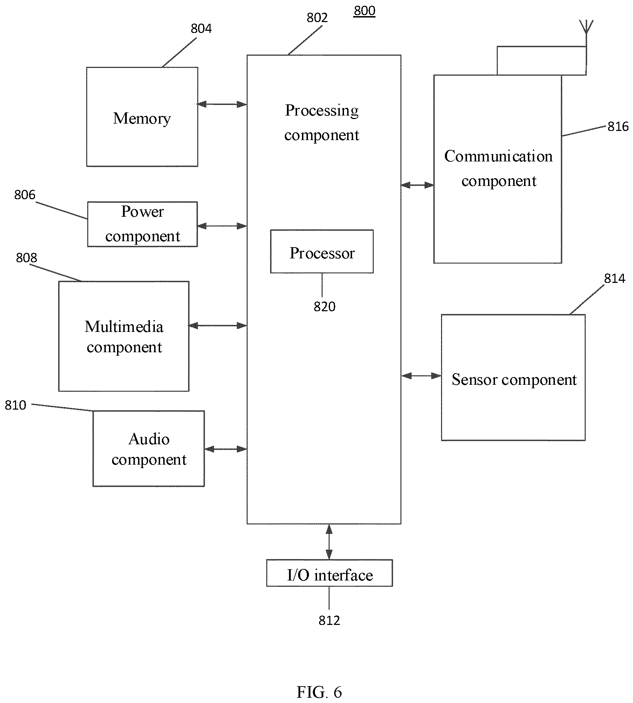

FIG. 6 is a block diagram showing a terminal device 800 according to an example. For example, the device 800 may be a smart phone, a tablet, etc.

Referring to FIG. 6, the device 800 may include one or more of the following components: a processing component 802, a memory 804, a power component 806, a multimedia component 808, an audio component 810, an input/output (I/O) interface 812, a sensor component 814, and a communication component 816.

The processing component 802 usually controls the overall operations of the device 800, such as operations associated with display, telephone call, data communication, camera operation and recording operation. The processing component 802 may include one or more processors 820 to execute instructions to complete all of or part of the steps of the above method. In addition, the processing component 802 may include one or more modules to facilitate the interaction between the processing component 802 and other components. For example, the processing component 802 may include a multimedia module to facilitate interaction between the multimedia component 808 and the processing component 802.

The memory 804 is configured to store various types of data to support the operations of the device 800. Examples of these data include instructions for any application or method operated on the device 800, contact data, phone book data, messages, pictures, videos, etc. The memory 804 may be implemented by any type of volatile or non-volatile storage device or a combination of them, such as a static random access memory (SRAM), an electrically erasable programmable read-only memory (EEPROM), an erasable. programmable read-only memory (EPROM), a programmable read-only memory (PROM), a read-only memory (ROM), a magnetic memory, a flash memory, a magnetic disk or an optical disk.

The power component 806 provides power for various components of the device 800. The power component 806 may include a power management system, one or more power sources, and other components associated with power generation, management and distribution of the device 800.

The multimedia component 808 includes a screen for providing an output interface between the device 800 and the user. In some examples, the screen may include a liquid crystal display (LCD) and a touch panel (TP). When the screen includes a touch panel, the screen may be implemented as a touch screen to receive input signals from the user. The touch panel includes one or more touch sensors to sense touches, slides and gestures on the touch panel. The touch sensor may sense not only the boundary of the touch or slide, but also the duration and pressure associated with the touch or slide. In some examples, the multimedia component 808 includes a front camera and/or a rear camera. When the device 800 is in an operation mode, such as a shooting mode or a video mode, the front camera and/or the rear camera may receive external multimedia data. Each front or rear camera may be a fixed optical lens system or have a focal length and optical zoom capability.

The audio component 810 is configured to output and/or input audio signals. For example, the audio component 810 includes a microphone (MIC), and when the device 800 is in an operation mode, such as a call mode, a recording mode and a voice recognition mode, the microphone is configured to receive external audio signals. The received audio signals may be further stored in the memory 804 or sent by the communication component 816. In some examples, the audio component 810 further includes a speaker for outputting audio signals.

The I/O interface 812 provides an interface between the processing component 802 and a peripheral interface module. The peripheral interface module may be a keyboard, a click wheel, buttons, etc. These buttons may include, but are not limited to a home button, a volume button, a start button and a lock button.

The sensor component 814 includes one or more sensors for providing various aspects of status assessment for the device 800. For example, the sensor component 814 can detect an on/off state of the device 800, and relative positions of components such as a display and a keypad of the device 800. The sensor component 814 can also detect a position change of the device 800 or one component of the device 800, presence or absence of contact between the user and the device 800, an orientation or acceleration/deceleration of the device 800 and a temperature change of the device 800. The sensor component 814 may include a proximity sensor configured to detect the presence of nearby objects without any physical contact. The sensor component 814 may also include an optical sensor, such as a CMOS or CCD image sensor, for use in imaging applications. In some examples, the sensor component 814 may also include an acceleration sensor, a gyroscope sensor, a magnetic sensor, a pressure sensor or a temperature sensor.

The communication component 816 is configured to facilitate wired or wireless communication between the device 800 and other devices. The device 800 may access a wireless network based on communication standards, such as WiFi, 2G or 3G, or a combination of them. In an example, the communication component 816 receives broadcast signals or broadcast associated information from an external broadcast management system via a broadcast channel. In an example, the communication component 816 further includes a near field communication (NFC) module to facilitate short-range communication. For example, the NFC module may be implemented based on radio frequency identification (RFID) technology, infrared data association (IrDA) technology, ultra wide band (UWB) technology, Bluetooth (BT) technology, and other technologies.

In an example, the device 800 may be implemented by one or more application specific integrated circuits (ASICs), digital signal processors (DSPs), digital signal processing devices (DSPDs), programmable logic devices (PLDs), field programmable gate arrays (FPGAs), controllers, microcontrollers, microprocessors or other electronic components to perform the above method.

In an example, a non-transitory computer-readable storage medium including instructions is further provided, such as a memory 804 including instructions executable by the processor 820 of the device 800 to complete the above method. For example, the non-transitory computer-readable storage medium may be an ROM, a random access memory (RAM), a CD-ROM, a magnetic tape, a floppy disk, an optical data storage device, etc.

A non-transitory computer-readable storage medium comprising instructions that when executed by a processor of a terminal enable the terminal to execute the method as described in the first aspect of the invention.

## Claims

1. A voice call method, applied to a terminal comprising a first subscriber module and a second subscriber module,
the method comprising
monitoring (S11) a network quality of the first subscriber module while performing an Internet protocol Multimedia Subsystem ,IMS, session; and
in response to determining that the network quality of the first subscriber module while performing the IMS session does not satisfy a preset network quality condition, and the second subscriber module satisfies a predetermined switching condition, switching (S12) to the second subscriber module to continue the IMS session;
wherein the second subscriber module satisfying the predetermined switching condition comprises at least one of:
the network quality of the second subscriber module being better than that of the first subscriber module; and,
a network traffic accounting mode of the second subscriber module being better than that of the first subscriber module;
wherein monitoring (S11) the network quality of the first subscriber module while performing an IMS session is **characterized by**:
comprehensively determining the network quality of the first subscriber module while performing the IMS session based on a plurality of evaluation parameters for the network quality, wherein each of the evaluation parameters for the network quality corresponds to a preset weight.

2. The method according to claim 1, wherein switching (S12) to the second subscriber module to continue the IMS session comprises:
performing Internet Protocol Security ,IPSec, authentication on a network of the second subscriber module by using identity parameters of the first subscriber module; and
after the IPSec authentication succeeds, continuing the IMS session through the second subscriber module.

3. The method according to claim 2, wherein performing IPSec authentication on the network of the second subscriber module by using identity parameters of the first subscriber module comprises:
performing the IPSec authentication on the network of the second subscriber module by using the identity parameters of the first subscriber module during the second subscriber module establishes an IMS Public Data Network ,PDN, connection.

4. The method according to any of claims 1 to 3, wherein evaluation parameters for the network quality comprise at least one of:
Signal to Noise Ratio ,SNR, of a network transmission channel;
Block Error Rate ,BLER, of the network transmission channel; and
Reference Signal Receiving Power ,RSRP, of the network transmission channel.

5. The method according to any of claims 1 to 3, wherein monitoring (S11) the network quality of the first subscriber module while performing an IMS session comprises:
determining the network quality of the first subscriber module while performing the IMS session based on evaluation parameters for a voice state, wherein the evaluation parameters for the voice state comprise at least one of:
bit error rate of voice;
silent frames of voice; and
frame rate of voice.

6. A terminal (800), comprising:
a first subscriber module and a second subscriber module;
a processor (820); and
a memory (804) for storing processor executable instructions;
wherein the processor (820) is configure to:
monitor a network quality of the first subscriber module while performing an Internet protocol Multimedia Subsystem ,IMS, session; and
in response to determining that the network quality of the first subscriber module while performing the IMS session does not satisfy a preset network quality condition, and the second subscriber module satisfies a predetermined switching condition, switch to the second subscriber module to continue the IMS session;
wherein the second subscriber module satisfying the predetermined switching condition comprises at least one of:
the network quality of the second subscriber module being better than that of the first subscriber module; and
a network traffic accounting mode of the second subscriber module being better than that of the first subscriber module;
the terminal (800) being **characterized in that** the processor (820) is further configured to:
comprehensively determine the network quality of the first subscriber module while performing the IMS session based on a plurality of evaluation parameters for the network quality, wherein each of the evaluation parameters for the network quality corresponds to a preset weight

7. The terminal (800) according to claim 6, wherein the processor (820) is further configured to:
perform Internet Protocol Security ,IPSec, authentication on a network of the second subscriber module by using identity parameters of the first subscriber module; and
after the IPSec authentication succeeds, continue the IMS session through the second subscriber module.

8. The terminal (800) according to claim 7, wherein the processor (820) is configured to:
perform the IPSec authentication on the network of the second subscriber module by using the identity parameters of the first subscriber module during the second subscriber module establishes an IMS Public Data Network ,PDN, connection.

9. The terminal (800) according to any of claims 6 to 8, wherein evaluation parameters for the network quality comprise at least one of:
Signal to Noise Ratio ,SNR, of a network transmission channel;
Block Error Rate ,BLER, of the network transmission channel; and
Reference Signal Receiving Power ,RSRP, of the network transmission channel.

10. The terminal (800) according to any of claims 6 to 8, wherein the processor (820) is configured to:
determine the network quality of the first subscriber module while performing the IMS session based on evaluation parameters for a voice state, wherein the evaluation parameters for the voice state comprise at least one of:
bit error rate of voice;
silent frames of voice; and
frame rate of voice.

11. A non-transitory computer-readable storage medium is provided, when instructions in the storage medium are executed by a processor of a terminal, the terminal can execute the voice call method according to any of claims 1 to 5.

## Patentansprüche

1. Sprachanrufverfahren, angewendet auf ein Endgerät mit einem ersten Teilnehmermodul und einem zweiten Teilnehmermodul,
wobei das Verfahren die folgenden Schritte aufweist:
Überwachen (S11) einer Netzwerkqualität des ersten Teilnehmermoduls während des Durchführens einer IP Multimedia Subsystem, IMS,-Sitzung; und
in Reaktion auf die Feststellung, dass die Netzwerkqualität des ersten Teilnehmermoduls während des Durchführens der IMS-Sitzung eine voreingestellte Netzwerkqualitätsbedingung nicht erfüllt, und das zweite Teilnehmermodul eine vorbestimmte Schaltbedingung erfüllt, Umschalten (S12) auf das zweite Teilnehmermodul, um die IMS-Sitzung fortzusetzen;
wobei das Erfüllen der vorbestimmten Schaltbedingung durch das zweite Teilnehmermodul aufweist, dass
die Netzwerkqualität des zweiten Teilnehmermoduls besser als diejenige des ersten Teilnehmermoduls ist; und/oder
ein Netzwerkverkehrsabrechnungsmodus des zweiten Teilnehmermoduls besser als derjenige des ersten Teilnehmermoduls ist;
wobei das Überwachen (S11) der Netzwerkqualität des ersten Teilnehmermoduls während des Durchführens einer IMS-Sitzung **gekennzeichnet ist, durch**
ein umfassendes Ermitteln der Netzwerkqualität des ersten Teilnehmermoduls während des Durchführens der IMS-Sitzung basierend auf mehreren Auswertungsparametern für die Netzwerkqualität, wobei jeder der Auswertungsparameter für die Netzwerkqualität einem voreingestellten Gewicht entspricht.

2. Verfahren nach Anspruch 1, bei welchem das Umschalten (S12) auf das zweite Teilnehmermodul, um die IMS-Sitzung die folgenden Schritte aufweist:
Durchführen einer IP Security, IPSec, -Authentisierung eines Netzwerks des zweiten Teilnehmermoduls durch Verwenden von Identitätsparametern des ersten Teilnehmermoduls; und
nach erfolgreicher IPSec-Authentisierung, Fortsetzen der IMS-Sitzung durch das zweite Teilnehmermodul.

3. Verfahren nach Anspruch 2, bei welchem das Durchführen der IPSec-Authentisierung eines Netzwerks des zweiten Teilnehmermoduls durch Verwenden von Identitätsparametern des ersten Teilnehmermoduls den folgenden Schritt aufweist:
Durchführen der IPSec-Authentisierung des Netzwerks des zweiten Teilnehmermoduls durch Verwenden der Identitätsparameter des ersten Teilnehmermoduls, während das zweite Teilnehmermodul eine IMS Public Data Network, PDN,-Verbindung herstellt.

4. Verfahren nach einem der Ansprüche 1 bis 3, bei welchem Auswertungsparameter für die Netzwerkqualität aufweisen:
Signal-Rausch-Verhältnis, SNR, eines Netzwerkübertragungskanals; und/oder
Block Error Rate, BLER, des Netzwerkübertragungskanals; und/oder
Reference Signal Receiving Power, RSRP, des Netzwerkübertragungskanals.

5. Verfahren nach einem der Ansprüche 1 bis 3, bei welchem das Überwachen (S11) der Netzwerkqualität des ersten Teilnehmermoduls während des Durchführens einer IMS-Sitzung den folgenden Schritt aufweist:
Ermitteln der Netzwerkqualität des ersten Teilnehmermoduls während des Durchführens der IMS-Sitzung basierend auf Auswertungsparametern für einen Sprachzustand, wobei die Auswertungsparameter für den Sprachzustand aufweisen:
Bitfehlerrate der Sprache; und/oder
leise Frames der Sprache; und/oder
Frame-Rate der Sprache.

6. Endgerät (800) mit:
einem ersten Teilnehmermodul und einem zweiten Teilnehmermodul;
einem Prozessor (820); und
einem Speicher (804) zum Speichern von durch den Prozessor ausführbaren Befehlen;
wobei der Prozessor (820) dazu ausgebildet ist,
eine Netzwerkqualität des ersten Teilnehmermoduls während des Durchführens einer IP Multimedia Subsystem, IMS,-Sitzung zu überwachen; und
in Reaktion auf die Feststellung, dass die Netzwerkqualität des ersten Teilnehmermoduls während des Durchführens der IMS-Sitzung eine voreingestellte Qualitätsbedingung nicht erfüllt, und das zweite Teilnehmermodul eine vorbestimmte Schaltbedingung erfüllt, auf das zweite Teilnehmermodul umzuschalten, um die IMS-Sitzung fortzusetzen;
wobei das Erfüllen der vorbestimmten Schaltbedingung durch das zweite Teilnehmermodul aufweist, dass
die Netzwerkqualität des zweiten Teilnehmermoduls besser als diejenige des ersten Teilnehmermoduls ist; und/oder
ein Netzwerkverkehrsabrechnungsmodus des zweiten Teilnehmermoduls besser als derjenige des ersten Teilnehmermoduls ist;
wobei das Endgerät (800) **dadurch gekennzeichnet ist, dass** der Prozessor (820) ferner dazu ausgebildet ist,
die Netzwerkqualität des ersten Teilnehmermoduls während des Durchführens der IMS-Sitzung basierend auf mehreren Auswertungsparametern für die Netzwerkqualität umfassend zu ermitteln, wobei jeder der Auswertungsparameter für die Netzwerkqualität einem voreingestellten Gewicht entspricht.

7. Endgerät (800) nach Anspruch 6, bei welchem der Prozessor (820) ferner dazu ausgebildet ist,
eine IP Security, IPSec, -Authentisierung eines Netzwerks des zweiten Teilnehmermoduls durch Verwenden von Identitätsparametern des ersten Teilnehmermoduls durchzuführen; und
nach erfolgreicher IPSec-Authentisierung, die IMS-Sitzung durch das zweite Teilnehmermodul fortzusetzen.

8. Endgerät (800) nach Anspruch 7, bei welchem der Prozessor (820) dazu ausgebildet ist,
die IPSec-Authentisierung des Netzwerks des zweiten Teilnehmermoduls durch Verwenden der Identitätsparameter des ersten Teilnehmermoduls durchzuführen, während das zweite Teilnehmermodul eine IMS Public Data Network, PDN,-Verbindung herstellt.

9. Endgerät (800) nach einem der Ansprüche 6 bis 8, bei welchem Auswertungsparameter für die Netzwerkqualität aufweisen:
Signal-Rausch-Verhältnis, SNR, eines Netzwerkübertragungskanals; und/oder
Block Error Rate, BLER, des Netzwerkübertragungskanals; und/oder
Reference Signal Receiving Power, RSRP, des Netzwerkübertragungskanals.

10. Endgerät (800) nach einem der Ansprüche 6 bis 8, bei welchem der Prozessor (820) dazu ausgebildet ist,
die Netzwerkqualität des ersten Teilnehmermoduls während des Durchführens der IMS-Sitzung basierend auf Auswertungsparametern für einen Sprachzustand zu ermitteln, wobei die Auswertungsparameter für den Sprachzustand aufweisen:
Bitfehlerrate der Sprache; und/oder
leise Frames der Sprache; und/oder
Frame-Rate der Sprache.

11. Nichtflüchtiges computerlesbares Speichermedium, wobei bei Ausführung von Befehlen im Speichermedium durch einen Prozessor eines Endgeräts, das Endgerät das Sprachanrufverfahren nach einem der Ansprüche 1 bis 5 ausführen kann.

## Revendications

1. Procédé d'appel vocal, appliqué à un terminal comprenant un premier module d'abonné et un second module d'abonné,
le procédé comprenant
la surveillance (S11) d'une qualité de réseau du premier module d'abonné pendant la réalisation d'une session de sous-système multimédia à protocole internet, IMS ; et
après avoir déterminé que la qualité de réseau du premier module d'abonné pendant la réalisation de la session IMS ne satisfait pas à une condition de qualité de réseau prédéfinie, et que le second module d'abonné satisfait à une condition de commutation prédéterminée, la commutation (S12) vers le second module d'abonné pour poursuivre la session IMS ;
dans lequel le second module d'abonné satisfaisant à la condition de commutation prédéterminée comprend au moins l'un parmi :
la qualité de réseau du second module d'abonné étant meilleure que celle du premier module d'abonné ; et,
un mode de comptabilisation de trafic sur le réseau du second module d'abonné étant meilleur que celui du premier module d'abonné ;
dans lequel la surveillance (S11) de la qualité de réseau du premier module d'abonné pendant la réalisation d'une session IMS est **caractérisée par :**
la détermination de manière exhaustive de la qualité de réseau du premier module d'abonné pendant la réalisation de la session IMS sur la base d'une pluralité de paramètres d'évaluation pour la qualité de réseau, dans lequel chacun des paramètres d'évaluation pour la qualité de réseau correspond à un poids prédéfini.

2. Procédé selon la revendication 1, dans lequel la commutation (S12) vers le second module d'abonné pour poursuivre la session IMS comprend :
la réalisation d'une authentification de sécurité du protocole Internet, IPSec, sur un réseau du second module d'abonné en utilisant les paramètres d'identité du premier module d'abonné ; et
une fois l'authentification IPSec réussie, la poursuite de la session IMS par l'intermédiaire du second module d'abonné.

3. Procédé selon la revendication 2, dans lequel la réalisation de l'authentification IPSec sur le réseau du second module d'abonné en utilisant les paramètres d'identité du premier module d'abonné comprend :
la réalisation de l'authentification IPSec sur le réseau du second module d'abonné en utilisant les paramètres d'identité du premier module d'abonné pendant l'établissement, par le second module d'abonné, d'une connexion de réseau public de données, PDN, IMS.

4. Procédé selon l'une quelconque des revendications 1 à 3, dans lequel des paramètres d'évaluation pour la qualité de réseau comprennent au moins l'un parmi :
un rapport signal/bruit, SNR, d'un canal de transmission de réseau ;
un taux d'erreur sur les blocs, BLER, du canal de transmission de réseau ; et
une puissance de réception de signal de référence, RSRP, du canal de transmission de réseau.

5. Procédé selon l'une quelconque des revendications 1 à 3, dans lequel la surveillance (S11) de la qualité de réseau du premier module d'abonné pendant la réalisation d'une session IMS comprend :
la détermination de la qualité de réseau du premier module d'abonné pendant la réalisation de la session IMS sur la base de paramètres d'évaluation pour un état vocal, dans lequel les paramètres d'évaluation pour l'état vocal comprennent au moins l'un parmi :
le taux d'erreurs sur les bits de la voix ;
les trames silencieuses de la voix ; et
la fréquence de trames de la voix.

6. Terminal (800), comprenant :
un premier module d'abonné et un second module d'abonné ;
un processeur (820) ; et
une mémoire (804) permettant de stocker des instructions exécutables par un processeur ;
dans lequel le processeur (820) est configuré pour :
surveiller une qualité de réseau du premier module d'abonné pendant la réalisation d'une session de sous-système multimédia à protocole Internet, IMS ; et
après avoir déterminé que la qualité de réseau du premier module d'abonné pendant la réalisation de la session IMS ne satisfait pas à une condition de qualité de réseau prédéfinie, et que le second module d'abonné satisfait à une condition de commutation prédéterminée, commuter vers le second module d'abonné pour poursuivre la session IMS ;
dans lequel le second module d'abonné satisfaisant à la condition de commutation prédéterminée comprend au moins l'un parmi :
la qualité de réseau du second module d'abonné étant meilleure que celle du premier module d'abonné ; et
un mode de comptabilisation de trafic sur le réseau du second module d'abonné étant meilleur que celui du premier module d'abonné ;
le terminal (800) étant **caractérisé en ce que** le processeur (820) est en outre configuré pour :
déterminer de manière exhaustive la qualité de réseau du premier module d'abonné pendant la réalisation de la session IMS sur la base d'une pluralité de paramètres d'évaluation pour la qualité de réseau, dans lequel chacun des paramètres d'évaluation pour la qualité de réseau correspond à un poids prédéfini

7. Terminal (800) selon la revendication 6, dans lequel le processeur (820) est configuré en outre pour :
réaliser une authentification de sécurité du protocole Internet, IPSec, sur un réseau du second module d'abonné en utilisant les paramètres d'identité du premier module d'abonné ; et
une fois l'authentification IPSec réussie, poursuivre la session IMS par l'intermédiaire du second module d'abonné.

8. Terminal (800) selon la revendication 7, dans lequel le processeur (820) est configuré pour :
réaliser l'authentification IPSec sur le réseau du second module d'abonné en utilisant les paramètres d'identité du premier module d'abonné pendant l'établissement, par le second module d'abonné, d'une connexion de réseau public de données, PDN, IMS.

9. Terminal (800) selon l'une quelconque des revendications 6 à 8, dans lequel les paramètres d'évaluation pour la qualité de réseau comprennent au moins l'un parmi :
un rapport signal/bruit, SNR, d'un canal de transmission de réseau ;
un taux d'erreur sur les blocs, BLER, du canal de transmission de réseau ; et
une puissance de réception de signal de référence, RSRP, du canal de transmission de réseau.

10. Terminal (800) selon l'une quelconque des revendications 6 à 8, dans lequel le processeur (820) est configuré pour :
déterminer la qualité de réseau du premier module d'abonné pendant la réalisation de la session IMS sur la base de paramètres d'évaluation pour un état vocal, dans lequel les paramètres d'évaluation pour l'état vocal comprennent au moins l'un parmi :
le taux d'erreurs sur les bits de la voix ;
les trames silencieuses de la voix ; et
la fréquence de trames de la voix.

11. Support de stockage lisible par ordinateur non transitoire étant fourni, lorsque des instructions dans le support de stockage sont exécutées par un processeur d'un terminal, le terminal peut exécuter le procédé d'appel vocal selon l'une quelconque des revendications 1 à 5.
